# EUROPÄISCHE PATENTSCHRIFT

(11) **EP 3 706 977 B1**
(45) Veröffentlichungstag und Bekanntmachung des Hinweises auf die Patenterteilung: **23.02.2022**
(21) Anmeldenummer: 18800903.9
(22) Anmeldetag: 08.11.2018
(51) Int. Cl.: B29C 49/78, B29C 49/06, B29C 49/42, B29C 49/64, B29L 31/00

(54) **VERFAHREN UND VORRICHTUNG ZUM BEHANDELN VON KUNSTSTOFFBEHÄLTNISSEN MIT GESCHWINDIGKEITSREGELBARER BLASMASCHINE**
METHOD AND DEVICE FOR PROCESSING PLASTIC CONTAINERS BY MEANS OF A SPEED-CONTROLLABLE BLOW-MOLDING MACHINE
PROCÉDÉ ET DISPOSITIF DE TRAITEMENT DE RÉCIPIENTS EN PLASTIQUE À L'AIDE D'UNE MACHINE DE SOUFFLAGE À VITESSE RÉGLABLE

(30) Priorität: 09.11.2017 DE 102017126240
(43) Veröffentlichungstag der Anmeldung: 16.09.2020
(73) Patentinhaber: Krones AG, 93073 Neutraubling (DE)
(72) Erfinder: BLOCHMANN, Erik, 93073 Neutraubling (DE); FORSTHOEVEL, Jochen, 93073 Neutraubling (DE)
(74) Vertreter: Bittner, Bernhard
(86) Internationale Anmeldenummer: PCT/EP2018/080565
(87) Internationale Veröffentlichungsnummer: WO 2019/092078

(56) Entgegenhaltungen:
- WO-A1-2016/012704
- DE-A1-102015 114 947
- US-A1- 2013 231 772
- US-A1- 2016 325 485

## Beschreibung

Die vorliegende Erfindung bezieht sich auf ein Verfahren und eine Vorrichtung zum Behandeln von Kunststoffvorformlingen und/oder Kunststoffbehältnissen. Behandlungseinrichtungen für Kunststoffvorformlinge und Kunststoffbehältnisse sind seit längerer Zeit aus dem Stand der Technik bekannt. Üblicherweise durchlaufen die Kunststoffvorformlinge und Kunststoffbehältnisse während ihrer Herstellung dabei eine Reihe von unterschiedlichsten und verschiedensten Behandlungsvorgängen. In dem Stand der Technik sind solche Verfahren und Vorrichtungen beispielsweise in den Patentschriften DE102015-114947A1, WO2016/012704A1, US2013/231772A1 und US2016/325485A1 beschrieben.

Dazu zählen beispielsweise ein Herstellen der Vorformlinge, ein Erwärmen der Vorformlinge, ein Umformen der Vorformlinge zu Behältnissen, eine Sterilisation der Vorformlinge und/oder Behältnisse, ein Befüllen und Verschließen der Behältnisse oder auch ein Verpacken der befüllten und verschlossenen Behältnisse. Um diese nacheinander ablaufenden Behandlungsschritte aufeinander abzustimmen sind die einzelnen Behandlungseinrichtungen im Stand der Technik aufeinander synchronisiert bzw. miteinander geblockt oder gekoppelt. Insbesondere die Geschwindigkeiten der einzelnen Behandlungseinrichtungen müssen dabei aufeinander abgestimmt sein, um zu verhindern, dass einzelne Behandlungseinrichtungen zwischenzeitlich Stillstehen oder die Behältnisse zu lange oder zu kurz behandelt werden, da die Weitergabe an die nachfolgende Behandlungseinrichtung noch nicht möglich ist. Zu diesem Zweck wird den Behandlungseinrichtungen vor dem Betrieb ein Rezept zugewiesen, durch welches unter anderem die Geschwindigkeit der jeweiligen Behandlungseinrichtung festgelegt wird.

Durch dieses Rezept fährt die Blasmaschine im Stand der Technik aktuell mit einer durch das Rezept festgelegten Geschwindigkeit und ist nicht geschwindigkeitsregelbar. Dies bedeutet, dass es aktuell nicht möglich ist, die Geschwindigkeit der Blasmaschine an die Geschwindigkeit angebundener Maschinen wie z.B. einer nachgeschalteten und/oder vorgeschalteten Maschine anzupassen, so wie dies in der extremsten Situation in einem Block der Fall ist. Bei den der Blasmaschine nachgeschalten Maschinen handelt es sich üblicherweise um einen Füller, einen Verschließer, eine Verpackungsstation und/oder eine Sterilisationseinrichtung. Vorangeschaltet sind der Blasmaschine üblicherweise eine Spritzgießmaschine, eine Vorformlingsortierung, eine Heizeinrichtung und/oder eine Sterilisationseinrichtung. Ist demnach beispielsweise in einem Inline-System eine Spritzgießmaschine vor der Blasmaschine angeordnet und zusätzlich die Möglichkeit einer Pufferung zwischen der Spritzgießmaschine und der Blasmaschine vorhanden, so müsste die Blasmaschine zum Aufholen schneller fahren können. Dies ist im Stand der Technik allerdings nicht möglich, da die Geschwindigkeit der Blasmaschine durch das zugewiesene Rezept festgelegt ist.

Vielmehr müsste im Stand der Technik zur Änderung der Geschwindigkeit der Blasmaschine, die Blasmaschine zuerst leergefahren werden, was insbesondere auch erfordern würde, dass beispielsweise eine vorangeschaltete Spritzgießmaschine lediglich noch so lange produzieren kann bis ein zwischen der Blasmaschine und der Spritzgießmaschine angeordneter Puffer voll ist und diese dann ebenfalls stillsteht. Nach dem Leerfahren der Blasmaschine kann der Blasmaschine dann ein neues Rezept mit einer anderen Geschwindigkeit zugewiesen werden. Anschließend können alle Maschinen wieder gestartet werden, was beispielsweise bei der Heizeinrichtung eine ebenfalls erhebliche Zeit benötigt, da diese, um wieder produzieren zu können, zuerst wieder bis auf die erforderliche Temperatur aufgeheizt werden muss. Im Stand der Technik ist es demnach insbesondere auch nicht möglich kurzzeitig oder plötzlich auftretende Geschwindigkeitsunterschiede auszugleichen oder prozessspezifisch auf sich verändernde Gegebenheiten zu reagieren.

Der vorliegenden Erfindung liegt daher die Aufgabe zugrunde ein Verfahren und eine Vorrichtung bereitzustellen, welches/welche eine Anpassung der Geschwindigkeit der Blasmaschine insbesondere an gekoppelte Maschinen ermöglicht, wobei diese Anpassung insbesondere während des laufenden Betriebs und ohne die Erfordernis des Abschaltens einer oder mehrerer Maschinen erfolgen soll. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäßes Verfahren zum Behandeln von Kunststoffvorformlingen und/oder Kunststoffbehältnissen weist wenigstens eine ersten Behandlungseinrichtung, welche die Kunststoffbehältnisse in einer ersten vorgegebenen Weise behandelt und wenigstens eine zweite Behandlungseinrichtung auf, welche die Kunststoffbehältnisse in einer zweiten vorgegebenen Weise behandelt und welche der ersten Behandlungseinrichtung vor- oder nachgeschaltet ist. Weiterhin werden die Kunststoffbehältnisse mittels einer Transporteinrichtung von einer Behandlungseinrichtung zu der anderen Behandlungseinrichtung transportiert und die wenigstens erste Behandlungseinrichtung und die wenigstens zweite Behandlungseinrichtung sind miteinander gekoppelt. Weiterhin handelt es sich bei der ersten Behandlungseinrichtung um eine Blasmaschine zum Umformen von Kunststoffvorformlingen zu Kunststoffbehältnissen und die Prozessgeschwindigkeit der Blasmaschine wird durch ein Rezept festgelegt, welches mehrere Prozessparameter enthält, welche für den Umformungsvorgang charakteristisch sind.

Erfindungsgemäß werden anhand wenigstens zweier Eckrezepte die für wenigstens eine weitere Prozessgeschwindigkeit zugehörigen Prozessparameter wenigstens teilweise bestimmt, so dass eine Anpassung der Prozessgeschwindigkeit der Blasmaschine an eine Geschwindigkeit wenigstens einer weiteren Behandlungseinrichtung ermöglicht wird und/oder eine Einstellung der Geschwindigkeit möglich ist.

Mit dem erfindungsgemäßen Verfahren wird demnach ermöglicht, bei Bedarf und insbesondere auch im laufenden Betrieb die Blasmaschine individuell mit einer anderen Geschwindigkeit zu betreiben. Durch die Bestimmung der notwendigen Prozessparameter für jede weitere Geschwindigkeit wird zudem erreicht, dass die Blasmaschine nicht nur mit Geschwindigkeiten betrieben werden kann, welche durch ein vorab gespeichertes Rezept vorgegeben sind, sondern dass jede beliebige Geschwindigkeit einstellbar ist. Das erfindungsgemäße Verfahren schlägt demnach vorteilhaft eine geschwindigkeitsregelbare Blasmaschine vor, deren Geschwindigkeit an angebundene Maschinen angepasst werden kann, wie z.B. an einen nachgeschalteten Füller oder an eine vorgeschaltete Spritzgießmaschine. Dies ist insbesondere bei der Extremsituation in einem Block während des Herstellungsverfahrens in prozesstechnischer Hinsicht von Vorteil ist, da durch das vorgeschlagene Verfahren eine individuelle Anpassung der Geschwindigkeit ermöglicht wird, wobei hierzu die Produktionsleistung der Maschine nicht verringert werden muss.

Im Folgenden werden dabei unter Kunststoffbehältnissen bzw. Behältnissen sowohl Kunststoffvorformlinge, als auch bereits umgeformten Kunststoffbehältnisse verstanden.

Unter einer Blasmaschine wird insbesondere eine Vorrichtung zum Umformen von Kunststoffvorformlingen zu Kunststoffbehältnissen verstanden. Dies bedeutet, dass die Kunststoffvorformlinge zunächst in einer Heizstrecke thermisch konditioniert und anschließend durch Beaufschlagung mit einem flüssigen oder gasförmigen Medium expandiert werden. Das fließfähige Medium steht bevorzugt unter Druck. Für die Zuführung des unter Druck stehenden Mediums weist die Vorrichtung eine Blasdüse auf, welche an eine Mündung der Kunststoffvorformlinge dichtend anlegbar ist, um die Kunststoffvorformlinge so mit flüssigem oder gasförmigem Medium zu expandieren. Daneben ist bevorzugt auch eine Ventilanordnung vorgesehen, welche die Zuführung der Blasluft an die Kunststoffvorformlinge steuert. Bevorzugt ist es allerdings auch denkbar, dass die Expansion des Behältnisses mittels des Produkts erfolgt, so dass eine gleichzeitige Befüllung und Expansion des Behältnisses vorgenommen wird.

Bevorzugt handelt es sich bei der Blasmaschine um eine Streckblasmaschine, was bedeutet, dass die Vorformlinge vor und/oder während der Expansion mittels einer Reckstange in Längsrichtung gedehnt werden. Die Blasstationen weisen dabei jeweils Reckstangen auf, welche in die Kunststoffvorformlinge einführbar sind und die Kunststoffvorformlinge in ihrer Längsrichtung dehnen. Die Reckstangen weisen dabei bevorzugt einen elektrischen Antrieb auf. Denkbar ist bevorzugt allerdings auch die Reckstangen über Kurven zu steuern.

Bei einer vorteilhaften Ausführungsform ist eine Vielzahl von Blasstationen an einem gemeinsamen beweglichen Träger angeordnet. Bei diesem Träger handelt es sich dabei insbesondere um einen drehbaren Träger. Die Blasstationen weisen jeweils eine Blasformeinrichtung auf, welche bevorzugt einen Hohlraum ausbilden, innerhalb dessen die Kunststoffvorformlinge zu den Kunststoffbehältnissen expandierbar sind. Diese Blasformeinrichtungen sind dabei bevorzugt mehrteilig ausgebildet und weisen zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar, um die Blasformeinrichtungen zu öffnen und zu schließen. Zudem weist der Blasformträger Verriegelungsmechanismen auf, um die Formhälften während des Blasvorgangs gegeneinander zu verriegeln.

Besonders bevorzugt ist die Blasmaschine bzw. sind der Träger und die Blasformanordnungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen sind dabei bevorzugt außerhalb des Reinraums angeordnet.

Die Blasformeinrichtungen werden bevorzugt innerhalb des Reinraums transportiert. Der Reinraum wird bevorzugt von mehreren Wandungen begrenzt. Bevorzugt wird der Reinraum dabei von wenigstens einer stehenden Wandung und einer sich gegenüber dieser stehenden Wandung bewegenden Wandung begrenzt. Der Reinraum grenzt die Blasformen insbesondere von einer unsterilen Umgebung ab. Vorteilhaft ist der Reinraum ring- oder torusartig um die Blasstationen bzw. Umformungsstationen und/oder den Transportpfad der Kunststoffbehältnisse ausgebildet.

Bei einer bevorzugten Ausführungsform werden die Prozessparameter zwischen einem ersten Eckrezept, welches eine erste Geschwindigkeit enthält und einem zweiten Eckrezept, welches eine zweite Geschwindigkeit enthält nach einer mathematischen Vorschrift interpoliert und bevorzugt linear interpoliert. Denkbar wären dabei allerdings auch andere mathematische Beziehungen zwischen den Eckpunkten, wie beispielsweise eine exponentielle Interpolation, eine logarithmische Interpolation oder dergleichen. Wie oben bereits erwähnt, ist es mit dem vorgeschlagenen Verfahren und auch mit der vorgeschlagenen Vorrichtung möglich, dass als Geschwindigkeit für die Blasmaschine jeder beliebige Wert eingestellt wird, welcher zwischen den Geschwindigkeiten dieser Eckrezepte liegt. Es wird daher erfindungsgemäß eine Möglichkeit zur Geschwindigkeitsregelung zwischen vorher festgelegten "Eckrezepten" vorgeschlagen, wobei hierzu alle Prozessparameter beispielsweise zwischen einem Rezept für die Geschwindigkeit x und einem Rezept für die Geschwindigkeit y "linear interpoliert" werden.

Bei einer weiteren vorteilhaften Ausführungsform handelt es sich bei dem für den Umformungsvorgang charakteristischen Prozessparameter bevorzugt um eine Temperatur des Kunststoffvorformlings, so dass eine Anpassung des Rezepts anhand einer Temperatur des Kunststoffvorformlings erfolgt. Bevorzugt handelt es sich bei dieser Temperatur um eine Eingangstemperatur, welche der Vorformling beim Einlauf in die erste Behandlungseinrichtung und bevorzugt die Blasmaschine aufweist. Vorteilhaft wird die Temperatur dabei an der Mündung und/oder dem Grundkörper des Kunststoffvorformlings ermittelt. Besonders bevorzugt erfolgt demnach die Anpassung des Rezepts anhand der Eingangstemperatur der Kunststoffvorformlinge.

Eine Modifikation bzw. Anpassung eines entsprechend interpolierten Rezeptes kann demnach bevorzugt nach vorgegebenen Regeln anhand der Vorformlingtemperatur erfolgen, wobei die Temperatur bevorzugt an verschiedenen Stellen des Vorformlings ermittelt wird. Besonders bevorzugt erfolgt die Messung der Vorformlingtemperatur auch zu verschiedenen Zeitpunkten. Dies ist insbesondere sinnvoll, da hierdurch weitere Informationen über den Temperaturzustand des Vorformlings erhalten werden können.

Bei einer weiteren bevorzugten Ausführungsform handelt es sich bei der ersten Geschwindigkeit um eine minimale Geschwindigkeit der Blasmaschine und bei der zweiten Geschwindigkeit um eine maximale Geschwindigkeit der Blasmaschine. Bevorzugt erfolgt demnach eine Interpolation zwischen einer minimalen und einer maximalen Geschwindigkeit der Blasmaschine.

In einer vorteilhaften Ausführungsform werden die zwischen den Eckrezepten ermittelten Prozessparameter und zugehörigen Prozessgeschwindigkeiten in einem weiteren Rezept abgespeichert. Vorzugsweise ist hierfür eine Speichereinrichtung vorgesehen, in welcher diese neuen Rezepte abgespeichert werden. Durch diese Vorgehensweise wird ermöglicht, dass einmal verwendete Geschwindigkeiten immer wieder abgerufen und eingestellt werden können, wobei durch das Abspeichern auch schnell auf diese zugegriffen werden kann. Bevorzugt kann dabei ein Anlagenbediener über ein Bedienterminal auf die verschiedenen Rezepte zugreifen und diese auswählen. Vorzugsweise können die verschiedenen Rezepte dem jeweils herzustellenden Behältertyp zugeordnet sein. Bevorzugt könnte dieses neu abgespeicherte Rezept auch als weiteres und/oder zusätzliches Eckrezept für die Interpolation genutzt werden.

Bei einer besonders bevorzugten Ausführungsform sind die für den Umformungsvorgang charakteristischen Prozessparameter aus einer Gruppe von Prozessparametern ausgewählt, welche eine Temperatur der Kunststoffvorformlinge, einen Blasdruck, eine Umformungszeit, Schaltzeiten der Ventile, eine Temperatur der Blasform, eine Reckgeschwindigkeit und dergleichen enthält.

Eine Anpassung bzw. Änderung der Blasmaschinengeschwindigkeit erfordert auch die Anpassung bzw. Änderung aller mit dem Blasformvorgang zusammenhängender Parameter. Wird die Blasmaschine beispielsweise mit einer höheren Geschwindigkeit betrieben, so ist es auch erforderlich, dass der Ofen, welcher der Blasmaschine vorangeschaltet ist zum Erwärmen der Kunststoffvorformlinge mit einer höheren Geschwindigkeit betrieben wird. Aus diesem Grund ist es allerdings erforderlich die Heizleistung des Ofens bzw. der einzelnen in dem Ofen angeordneten Heizkästen zu erhöhen, da die Vorformlinge durch die höhere Geschwindigkeit des Ofens eine kürzere Zeit im Ofen verbringen würden und demnach bei einer gleichbleibenden Heizleistung eine zu geringe Temperatur aufweisen würden.

Bei einer bevorzugten Ausführungsform werden daher bei Änderung der Prozessgeschwindigkeit der Blasmaschine auch Heizparameter einer Heizeinrichtung verändert. Besonders bevorzugt erfolgt dabei zuerst eine Änderung der Heizparameter der Heizeinrichtung und anschließend wird die Geschwindigkeit der Blasmaschine verändert. Vorzugsweise weist die Heizeinrichtung eine Vielzahl von Heizkästen auf, welche entlang des Transportpfads der Kunststoffvorformlinge durch die Heizeinrichtung angeordnet sind.

Bevorzugt beinhaltet die lineare Interpolation daher die fließende Umstellung und/oder zeitverzögerte Aktivierung der veränderten Heizparameter und sofern notwendig die fließende und/oder zeitverzögerte Umschaltung der Blasparameter. Besonders bevorzugt wird mit der Umstellung bzw. Anpassung der Prozessparameter mit denjenigen Prozessparameter angefangen, welche die größte Verzögerungszeit haben bis deren Wirksamkeit eintritt. Das Aufheizen und/oder Abkühlen des Ofens auf die neue erforderliche Temperatur benötigt beispielsweise wesentlich mehr Zeit, als die Umstellung der Geschwindigkeit mit welcher beispielsweise die Reckstange betrieben wird.

Vorzugsweise erfolgt die Umstellung der Temperatur des Ofens blockweise bzw. Heizkastenweise für die entsprechende Anzahl Preforms vor dem jeweiligen Heizkasten. Bevorzugt ist es auch denkbar für die Bestimmung bzw. Berechnung der neuen Prozessparameter mehr als zwei Eckrezepte zu verwenden. Besonders bevorzugt können dabei, je nach verfahrenstechnischer Notwendigkeit, 2 bis n Eckrezepte verwendet werden.

In einer besonders bevorzugten Ausführungsform erfolgt die Geschwindigkeitsänderung der Blasmaschine fließend. Das heißt, dass die Geschwindigkeitsänderung nicht ruckartig bzw. schlagartig oder sprunghaft vorgenommen wird, sondern nach und nach bzw. schrittweise. Bevorzugt werden daher insbesondere größere Geschwindigkeitsänderungen langsam fließend getätigt, ohne durch plötzliche Änderungen die Regelung der Maschine aus dem Gleichgewicht zu bringen.

Die vorgeschlagene Vorgehensweise ist demnach insbesondere vorteilhaft, da es hierdurch bei der Umstellung nicht erforderlich ist, die Blasmaschine aufgrund unterschiedlicher Vorformlingtemperaturen (zwischenzeitlich) zu stoppen. Vielmehr wird hierdurch eine Möglichkeit zur Ausregelung bezüglich unterschiedlicher Temperaturen des Vorformlingkörpers und der Vorformlingmündung die eventuell kommen könnten gegeben. Bevorzugt könnte, wenn erforderlich, beispielsweise die Mündung des Vorformlings innerhalb der Blasmaschine aktiv gekühlt werden, wobei die Blasmaschine hierzu bevorzugt Kühleinrichtungen aufweist. Bevorzugt könnten auch die Temperaturen gemessen werden und in Reaktion darauf auf ein neues Rezept umgeschaltet werden oder zwischen Eckrezepten interpoliert werden.

Vorzugsweise ist zwischen der Blasmaschine und der Spritzgießmaschine eine Pufferung und insbesondere eine Pufferungseinrichtung vorgesehen. Diese Pufferungseinrichtung dient dabei bevorzugt zur Zwischenspeicherung der Kunststoffvorformlinge. Mittels dieser Pufferungseinrichtung und der Anpassung der Maschinengeschwindigkeit kann dabei beispielsweise erreicht werden, dass, sofern der Puffer abgebaut wird, die Leistung der Blasmaschine von 70.000 Flaschen auf 72.000 Flaschen erhöht wird.

Bei einer Verringerung der Geschwindigkeit der Blasform jedoch gleichbleibender Blaszeit, würde ein Vorformling nicht den gesamten Umfangswinkel, d.h. keine vollständige Drehung der Blasmaschine durchlaufen. Es könnte daher bevorzugt festgelegt werden, dass in Abhängigkeit der Geschwindigkeit der Blasform und gleichbleibender Blaszeit der Blasformvorgang in einem anderen Winkelbereich der Blasform ablaufen und/oder in einem anderen Winkelbereich der Blasform endet, welcher bevorzugt von einer vollständigen Drehung der Blasform abweicht. Besonders bevorzugt wird bei einer derartigen Ausführungsform beispielsweise die Reckstange, anstatt über Führungskurven, elektrisch gesteuert.

Bei einer bevorzugten alternativen Vorgehensweise wäre es demnach, anders als bisher beschrieben, auch denkbar in Abhängigkeit von der Maschinengeschwindigkeit den Umfangswinkel, entlang dessen der Streckblasvorgang durchgeführt wird, anzupassen. Die Anmelderin behält sich daher vor, auch unabhängig von dem oben beschriebenen Verfahren, auch das hier erwähnte Anpassen des Umfangswinkels zu beanspruchen.

Die vorliegende Erfindung ist weiterhin auch auf eine Vorrichtung zum Behandeln von Kunststoffvorformlingen und/oder Kunststoffbehältnissen gerichtet, mit wenigstens einer ersten Behandlungseinrichtung, welche die Kunststoffbehältnisse in einer ersten vorgegebenen Weise behandelt und mit wenigstens einer zweiten Behandlungseinrichtung, welche die Kunststoffbehältnisse in einer zweiten vorgegebenen Weise behandelt und welche der ersten Behandlungseinrichtung vor- oder nachgeschaltet ist, wobei die Kunststoffbehältnisse mittels einer Transporteinrichtung von einer Behandlungseinrichtung zu der anderen Behandlungseinrichtung transportierbar sind und die wenigstens erste Behandlungseinrichtung und die wenigstens zweite Behandlungseinrichtung miteinander koppelbar sind, wobei es sich bei der ersten Behandlungseinrichtung um eine Blasmaschine zum Umformen von Kunststoffvorformlingen zu Kunststoffbehältnissen handelt und die Prozessgeschwindigkeit der Blasmaschine durch ein Rezept festlegbar ist, welches mehrere Prozessparameter enthält, welche für den Umformungsvorgang charakteristisch sind.

Erfindungsgemäß sind anhand wenigstens zweier Eckrezepte die für wenigstens eine weitere Prozessgeschwindigkeit zugehörigen Prozessparameter wenigstens teilweise bestimmbar, so dass eine Anpassung der Prozessgeschwindigkeit der Blasmaschine an eine Geschwindigkeit wenigstens einer weiteren Behandlungseinrichtung ermöglicht wird und/oder eine Einstellung der Geschwindigkeit möglich ist.

Es wird demnach auch vorrichtungsseitig vorgeschlagen, eine erfindungsgemäße Vorrichtung bereitzustellen, mit welcher eine individuelle Geschwindigkeitsanpassung der Blasmaschine im laufenden Betrieb ermöglicht wird. Dabei soll auch vorrichtungsseitig durch die Bestimmung der notwendigen Prozessparameter für jede weitere Geschwindigkeit erreicht werden, dass die Blasmaschine nicht nur mit Geschwindigkeiten betrieben werden kann, welche durch vorab gespeicherte Rezepte vorgegeben sind, sondern dass jede beliebige Geschwindigkeit einstellbar ist. Das erfindungsgemäße Verfahren schlägt demnach vorteilhaft eine geschwindigkeitsregelbare Blasmaschine vor, deren Geschwindigkeit an angebundene Maschinen angepasst werden kann, wie z.B. an einen nachgeschalteten Füller oder an eine vorgeschaltete Spritzgießmaschine.

Bei einer bevorzugten Ausführungsform ist die zweite Behandlungseinrichtung aus einer Gruppe von Behandlungseinrichtungen ausgewählt, welche eine Spritzgießmaschine zum Herstellen von Kunststoffvorformlingen, eine Heizeinrichtung zum Erwärmen der Kunststoffvorformlinge, eine Fülleinrichtung zum Befüllen der Kunststoffbehältnisse, eine Verschließeinrichtung zum Verschließen der befüllten Behältnisse, eine Sterilisationseinrichtung zum Sterilisieren der Kunststoffvorformlinge und/oder Kunststoffbehältnisse und dergleichen enthält.

Bei einer weiteren bevorzugten Ausführungsform weist die Vorrichtung eine Pufferungseinrichtung auf, welche bevorzugt stromaufwärts der Blasmaschine angeordnet ist. Besonders bevorzugt ist die Pufferungseinrichtung zwischen der Blasmaschine und einer Spritzgießmaschine angeordnet. Die Pufferungseinrichtung dient dabei vorzugsweise zur Zwischenspeicherung von Kunststoffvorformlingen.

Besonders bevorzugt erfolgt auch vorrichtungsseitig eine langsame Geschwindigkeitsänderung auf die höhere Leistung um den Prozess langsam anzupassen. Vorteilhaft könnte beispielsweise wenn der Puffer leer ist wieder auf eine niedrigere Leistung und damit eine langsamere Geschwindigkeit umgestellt werden.

In einer weiteren bevorzugten Ausführungsform weist die Vorrichtung eine Speichereinrichtung auf, in welcher die zwischen den Eckrezepten ermittelten Prozessparameter und zugehörigen Prozessgeschwindigkeiten in einem weiteren Rezept abspeicherbar sind.

Weitere Vorteile und Ausführungsformen ergeben sich aus den beigefügten Zeichnungen:
Darin zeigen:
- Fig. 1: eine schematische Darstellung einer erfindungsgemäßen Vorrichtung; und
- Fig. 2: eine beispielhafte grafische Darstellung einer erfindungsgemäßen Ermittlung von Prozessparametern.

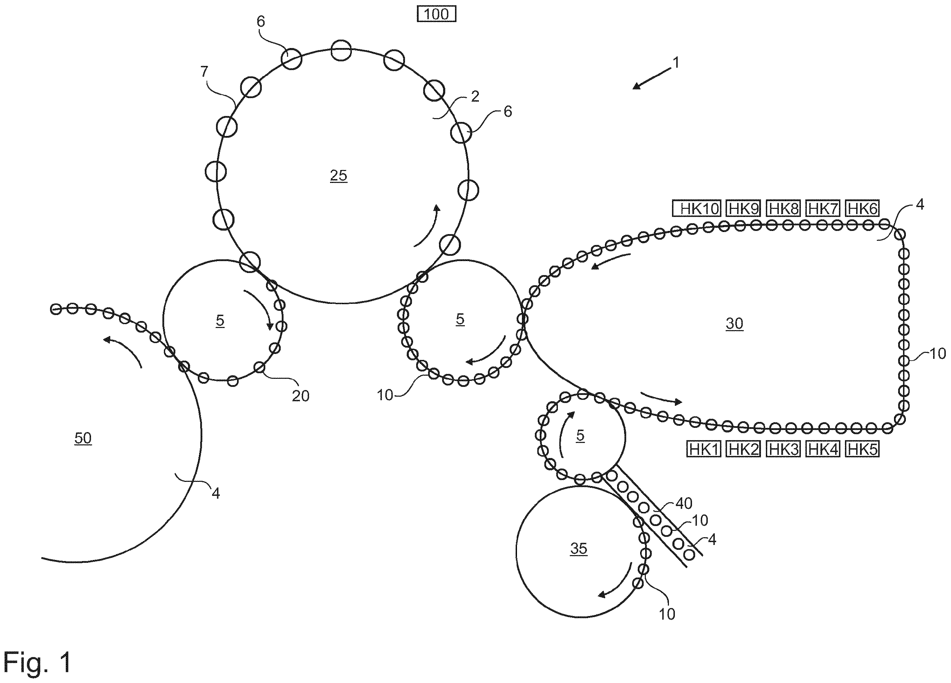

Figur 1 zeigt eine schematische Darstellung einer erfindungsgemäßen Vorrichtung 1 mit wenigstens einer ersten Behandlungseinrichtung 2 und einer zweiten Behandlungseinrichtung 4, wobei in dieser Darstellung insbesondere der prinzipielle Aufbau der verschiedenen Behandlungseinrichtungen 2, 4 erkennbar ist, wobei die Behandlungseinrichtungen insbesondere in Blockbauweise miteinander gekoppelt bzw. aufeinander synchronisiert sind. Das Bezugszeichen 25 kennzeichnet dabei die Blasmaschine, wobei stromabwärts der Blasmaschine 25 eine Heizeinrichtung 30, eine Pufferungseinrichtung 35 und eine Spritzgießmaschine 40 angeordnet sind und stromaufwärts der Blasmaschine eine Fülleinrichtung 50.

Demnach handelt es sich in der hier gezeigten Ausführungsform bei der ersten Behandlungseinrichtung 2 um eine Blasform 25 und bei der zweiten Behandlungseinrichtung beispielsweise um eine Fülleinrichtung 50 und/oder eine Spritzgießmaschine 40 und/oder eine Heizeinrichtung 30. Der Aufbau der Vorrichtung ist dabei allerdings nicht auf die in Figur 1 gezeigte Reihenfolge bzw. Anordnung der einzelnen Einrichtungen beschränkt. Insbesondere ist es auch denkbar, dass die Reihenfolge der Einrichtung verändert wird bzw. die Einrichtungen in einer anderen Reihenfolge angeordnet werden oder auch wenigere oder mehrere Einrichtungen als hier gezeigt vorhanden sind.

Zwischen den einzelnen Einrichtungen 40, 35, 30, 25, 50 sind bevorzugt Transporteinrichtungen 5 angeordnet, welche die Kunststoffvorformlinge 10 und/oder Kunststoffbehältnisse 20 zu der jeweils nachfolgenden Einrichtung transportieren. Bei den Transporteinrichtungen kann es sich beispielsweise um Förderbänder, Transportketten, Transportsterne oder dergleichen handeln. Bevorzugt ist dabei jede Art von Transporteinrichtung möglich, welche dazu geeignet und bestimmt ist, Kunststoffvorformlinge und/oder Kunststoffbehältnisse zu transportieren. In der Darstellung der Figur 1 werden die Kunststoffvorformlinge 10 bevorzugt innerhalb der Spritzgießmaschine 40 durch Extrusionsblasformen hergestellt und anschließend der Heizeinrichtung 30 und/oder der Pufferungseinrichtung 35 zugeführt, wobei die Vorformlinge 10 innerhalb der Heizeinrichtung 30 mittels einer Vielzahl von Heizkästen HK1...HK10 auf die für die Umformung erforderliche Temperatur aufgeheizt werden und anschließend der Blasmaschine 25 zugeführt werden.

Die Blasmaschine 25 weist dabei eine Vielzahl von Blasstationen 6 auf, welche an einen drehbaren Träger 6 angeordnet sind und innerhalb denen die Vorformlinge 10 zu Behältnissen 20 umgeformt werden. Nach dieser Umformung werden die Behältnisse 20 an eine Fülleinrichtung 50 weitergegeben, welche die Behältnisse mit dem gewünschten Produkt befüllt. Der Fülleinrichtung 50 kann dabei eine (nicht dargestellte) Verschließeinrichtung und/oder eine Verpackungsanlage nachgeschalten sein.

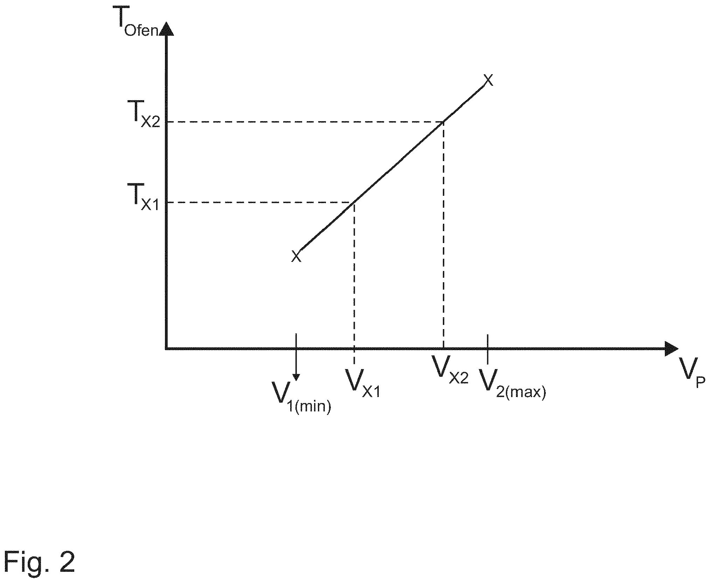

Fig. 2 zeigt eine beispielhafte grafische Darstellung einer erfindungsgemäßen Ermittlung von Prozessparametern. Die X-Achse des Graphen kennzeichnet dabei eine Prozessgeschwindigkeit Vp der Blasmaschine und die Y-Achse einen Prozessparameter, bei dem es ich hier bespielhaft um die Temperatur T_{OFEN} des Ofens bzw. der Heizeinrichtung handelt. Das Bezugszeichen V₁ bezieht sich dabei auf eine erste Geschwindigkeit, welche in einem ersten Eckrezept gespeichert ist und das Bezugszeichen V₂ auf eine zweite Geschwindigkeit, welche in einem zweiten Eckrezept gespeichert ist, wobei es sich bei der ersten Geschwindigkeit V₁ beispielsweise bevorzugt um eine minimale Geschwindigkeit der Blasform handelt und bei der zweiten Geschwindigkeit V₂ beispielsweise um eine maximale Geschwindigkeit der Blasform. Denkbar wären allerdings auch andere Geschwindigkeitswerte.

Soll nun die Geschwindigkeit der Blasmaschine verändert werden, so werden als Referenzwerte die beiden Geschwindigkeiten V₁ und V₂ der Eckrezepte sowie deren zugehörige Prozessparameter der Ofentemperatur verwendet, um durch Interpolation zwischen diesen beiden Geschwindigkeiten die Prozessparameter für jede weitere Geschwindigkeit, welche zwischen den Geschwindigkeiten V₁ und V₂ liegen zu ermitteln. Beispielhaft wurden in diesem Beispiel die Prozessparameter T_{X1} und T_{X2} für die Geschwindigkeiten V_{X1} und V_{X2} ermittelt. Mittels dieser ermittelten Werte kann die Blasmaschine nun auf eine andere Geschwindigkeit eingestellt werden. Bevorzugt kann mit diesen Werten auch ein neues Rezept innerhalb einer Speichereinrichtung 100, welche schematisch in Figur 1 dargestellt ist, gespeichert werden. Dabei versteht sich, dass bei der Einstellung bzw. Anpassung der Blasformgeschwindigkeit nicht nur die Temperatur des Ofens an die neue Geschwindigkeit angepasst werden muss, sondern auch die weiteren Prozessparameter und insbesondere alle Prozessparameter, welche für den Blasformvorgang charakteristisch sind.

### Bezugszeichenliste

- 1: Vorrichtung
- 2: erste Behandlungseinrichtung
- 4: zweite Behandlungseinrichtung
- 5: Transporteinrichtung
- 6: Blasstation
- 7: Träger
- 10: Kunststoffvorformlinge
- 20: Kunststoffbehältnisse
- 25: Blasmaschine
- 30: Heizeinrichtung
- 35: Pufferungseinrichtung
- 40: Spritzgießmaschine
- 50: Fülleinrichtung
- 100: Speichereinrichtung
- HK1...HK10: Heizkasten
- T_{OFEN}: Temperatur Ofen
- V_{P}: Prozessgeschwindigkeit
- V₁: erste Geschwindigkeit
- V₂: zweite Geschwindigkeit
- Vx: weitere Prozessgeschwindigkeit

## Patentansprüche

1. Verfahren zum Behandeln von Kunststoffvorformlingen (10) und/oder Kunststoffbehältnissen (20) mit wenigstens einer ersten Behandlungseinrichtung (2), welche die Kunststoffbehältnisse (10, 20) in einer ersten vorgegebenen Weise behandelt und mit wenigstens einer zweiten Behandlungseinrichtung (4), welche die Kunststoffbehältnisse (10, 20) in einer zweiten vorgegebenen Weise behandelt und welche der ersten Behandlungseinrichtung (2) vor- oder nachgeschaltet ist, wobei die Kunststoffbehältnisse (10, 20) mittels einer Transporteinrichtung (5) von einer Behandlungseinrichtung (2, 4) zu der anderen Behandlungseinrichtung (2, 4) transportiert werden und die wenigstens erste Behandlungseinrichtung (2) und die wenigstens zweite Behandlungseinrichtung (4) miteinander gekoppelt sind, wobei es sich bei der ersten Behandlungseinrichtung (2) um eine Blasmaschine (25) zum Umformen von Kunststoffvorformlingen (10) zu Kunststoffbehältnissen (20) handelt und die Prozessgeschwindigkeit der Blasmaschine (25) durch ein Rezept festgelegt wird, welches mehrere Prozessparameter enthält, welche für den Umformungsvorgang charakteristisch sind, **dadurch gekennzeichnet, dass**
anhand wenigstens zweier Eckrezepte die für wenigstens eine weitere Prozessgeschwindigkeit zugehörigen Prozessparameter wenigstens teilweise bestimmt werden, so dass eine Anpassung der Prozessgeschwindigkeit der Blasmaschine (25) an eine Geschwindigkeit wenigstens einer weiteren Behandlungseinrichtung (2, 4) ermöglicht wird und/oder eine Einstellung der Geschwindigkeit möglich ist.

2. Verfahren nach Anspruch 1,
**dadurch gekennzeichnet, dass**
die Prozessparameter zwischen einem ersten Eckrezept, welches eine erste Geschwindigkeit enthält und einem zweiten Eckrezept, welches eine zweite Geschwindigkeit enthält nach einer mathematischen Vorschrift interpoliert und bevorzugt linear interpoliert werden.

3. Verfahren nach Anspruch 1,
**dadurch gekennzeichnet, dass**
es sich bei dem für den Umformungsvorgang charakteristischen Prozessparameter bevorzugt um eine Temperatur des Kunststoffvorformlings handelt, so dass eine Anpassung des Rezepts anhand einer Temperatur des Kunststoffvorformlings erfolgt.

4. Verfahren nach Anspruch 2,
**dadurch gekennzeichnet, dass**
es sich bei der ersten Geschwindigkeit um eine minimale Geschwindigkeit der Blasmaschine (25) und bei der zweiten Geschwindigkeit um eine maximale Geschwindigkeit der Blasmaschine (25) handelt.

5. Verfahren nach wenigstens einem der vorhergehenden Ansprüche,
**dadurch gekennzeichnet, dass**
die zwischen den Eckrezepten ermittelten Prozessparameter und zugehörigen Prozessgeschwindigkeiten in einem weiteren Rezept abgespeichert werden.

6. Verfahren nach wenigstens einem der vorhergehenden Ansprüche,
**dadurch gekennzeichnet, dass**
die Geschwindigkeitsänderung der Blasmaschine (25) fließend erfolgt.

7. Verfahren nach wenigstens einem der vorhergehenden Ansprüche,
**dadurch gekennzeichnet, dass**
die für den Umformungsvorgang charakteristischen Prozessparameter aus einer Gruppe von Prozessparametern ausgewählt sind, welche eine Temperatur der Kunststoffvorformlinge, einen Blasdruck, eine Umformungszeit, Schaltzeiten der Ventile, eine Temperatur der Blasform, eine Reckgeschwindigkeit und dergleichen enthält.

8. Verfahren nach wenigstens einem der vorhergehenden Ansprüche,
**dadurch gekennzeichnet, dass**
bei Änderung der Prozessgeschwindigkeit der Blasmaschine (25) auch Heizparameter einer Heizeinrichtung (30) verändert werden.

9. Verfahren nach Anspruch 8,
**dadurch gekennzeichnet, dass**
zuerst eine Änderung der Heizparameter der Heizeinrichtung (30) erfolgt und anschließend die Geschwindigkeit der Blasmaschine (25) verändert wird.

10. Vorrichtung (1) zum Behandeln von Kunststoffvorformlingen (10) und/oder Kunststoffbehältnissen (20) mit wenigstens einer ersten Behandlungseinrichtung (2), welche die Kunststoffbehältnisse (10, 20) in einer ersten vorgegebenen Weise behandelt und mit wenigstens einer zweiten Behandlungseinrichtung (4), welche die Kunststoffbehältnisse (10, 20) in einer zweiten vorgegebenen Weise behandelt und welche der ersten Behandlungseinrichtung vor- oder nachgeschaltet ist, wobei die Kunststoffbehältnisse (10, 20) mittels einer Transporteinrichtung (5) von einer Behandlungseinrichtung (2, 4) zu der anderen Behandlungseinrichtung (2, 4) transportierbar sind und die wenigstens erste Behandlungseinrichtung (2) und die wenigstens zweite Behandlungseinrichtung (4) miteinander koppelbar sind, wobei es sich bei der ersten Behandlungseinrichtung (2) um eine Blasmaschine (25) zum Umformen von Kunststoffvorformlingen (10) zu Kunststoffbehältnissen (20) handelt und die Prozessgeschwindigkeit der Blasmaschine (25) durch ein Rezept festlegbar ist, welches mehrere Prozessparameter enthält, welche für den Umformungsvorgang charakteristisch sind,
**dadurch gekennzeichnet, dass**
anhand wenigstens zweier Eckrezepte die für wenigstens eine weitere Prozessgeschwindigkeit zugehörigen Prozessparameter wenigstens teilweise bestimmbar sind, so dass eine Anpassung der Prozessgeschwindigkeit der Blasmaschine (25) an eine Geschwindigkeit wenigstens einer weiteren Behandlungseinrichtung (2, 4) ermöglicht wird und/oder eine Einstellung der Geschwindigkeit möglich ist.

11. Vorrichtung (1) nach Anspruch 10,
**dadurch gekennzeichnet, dass**
die zweite Behandlungseinrichtung (4) aus einer Gruppe von Behandlungseinrichtungen ausgewählt ist, welche eine Spritzgießmaschine (40) zum Herstellen von Kunststoffvorformlingen (10), eine Heizeinrichtung (30) zum Erwärmen der Kunststoffvorformlinge (10), eine Fülleinrichtung (50) zum Befüllen der Kunststoffbehältnisse (20), eine Verschließeinrichtung zum Verschließen der befüllten Behältnisse (20), eine Sterilisationseinrichtung zum Sterilisieren der Kunststoffvorformlinge (10) und/oder Kunststoffbehältnisse (20) und dergleichen enthält.

12. Vorrichtung (1) nach wenigstens einem der vorhergehenden Ansprüche,
**dadurch gekennzeichnet, dass**
die Vorrichtung eine Pufferungseinrichtung (35) aufweist, welche bevorzugt stromaufwärts der Blasmaschine (25) angeordnet ist.

13. Vorrichtung (1) nach wenigstens einem der vorhergehenden Ansprüche,
**dadurch gekennzeichnet, dass**
die Vorrichtung (1) eine Speichereinrichtung (100) aufweist, in welcher die zwischen den Eckrezepten ermittelten Prozessparameter und zugehörigen Prozessgeschwindigkeiten in einem weiteren Rezept abspeicherbar sind.

## Claims

1. Method for processing plastic preforms (10) and/or plastic containers (20) with at least one first processing device (2), which processes the plastic containers (10, 20) in a first predetermined manner, and with at least one second processing device (4), which processes the plastic containers (10, 20) in a second predetermined manner and which is connected upstream or downstream of the first processing device (2), wherein the plastic containers (10, 20) are transported by means of a transport device (5) from one processing device (2, 4) to the other processing device (2, 4) and the at least first processing device (2) and the at least second processing device (4) are coupled to one another, wherein the first processing device (2) is a blow moulding machine (25) for transforming plastic preforms (10) into plastic containers (20) and the process speed of the blow moulding machine (25) is specified by a formula which contains several process parameters which are characteristic for the transforming process,
**characterised in that**
by means of at least two key formulas the process parameters associated with at least one further process speed are determined at least partially, so that an adjustment of the process speed of the blow moulding machine (25) to a speed of at least one further processing device (2, 4) is enabled and/or a setting of the speed is possible.

2. Method according to claim 1,
**characterised in that**
the process parameters are interpolated, and preferably linearly interpolated, according to a mathematical rule between a first key formula which contains a first speed and a second key formula which contains a second speed.

3. Method according to claim 1,
**characterised in that**
the process parameter which is characteristic for the transforming process is preferably a temperature of the plastic preform, so that an adaptation of the formula takes place with reference to a temperature of the plastic preform.

4. Method according to claim 2,
**characterised in that**
the first speed is a minimum speed of the blow moulding machine (25) and the second speed is a maximum speed of the blow moulding machine (25).

5. Method according to at least one of the preceding claims,
**characterised in that**
the process parameters determined between the key formulas and respective process speeds are stored in a further formula.

6. Method according to at least one of the preceding claims,
**characterised in that**
the change of speed of the blow moulding machine (25) takes place smoothly.

7. Method according to at least one of the preceding claims,
**characterised in that**
the process parameters which are characteristic of the transforming process are selected from a group of process parameters, which includes a temperature of the plastic preforms, a blow moulding pressure, a transforming time, switching times of the valves, a temperature of the blow mould, a stretching speed and the like.

8. Method according to at least one of the preceding claims,
**characterised in that**
in the event of a change to the process speed of the blow moulding machine (25), heating parameters of a heating device (30) are also changed.

9. Method according to claim 8,
**characterised in that**
a change to the heating parameters of the heating device (30) takes place first, and then the speed of the blow moulding machine (25) is changed.

10. Apparatus (1) for processing plastic preforms (10) and/or plastic containers (20) with at least one first processing device (2), which processes the plastic containers (10, 20) in a first predetermined manner, and with at least one second processing device (4), which processes the plastic containers (10, 20) in a second predetermined manner and which is connected upstream or downstream of the first processing device, wherein the plastic containers (10, 20) can be transported by means of a transport device (5) from one processing device (2, 4) to the other processing device (2, 4) and the at least first processing device (2) and the at least second processing device (4) can be coupled to one another, wherein the first processing device (2) is a blow moulding machine (25) for transforming plastic preforms (10) into plastic containers (20) and the process speed of the blow moulding machine (25) can be specified by a formula which contains several process parameters which are characteristic for the transforming process,
**characterised in that**
by means of at least two key formulas the process parameters associated with at least one further process speed can be determined at least partially, so that an adjustment of the process speed of the blow moulding machine (25) to a speed of at least one further processing device (2, 4) is enabled and/or a setting of the speed is possible.

11. Apparatus (1) according to claim 10,
**characterised in that**
the second processing device (4) is selected from a group of processing devices which includes an injection moulding machine (40) for producing plastic preforms (10), a heating device (30) for heating the plastic preforms (10), a filling device (50) for filling the plastic containers (20), a closing device for closing the filled containers (20), a sterilisation device for sterilising the plastic preforms (10) and/or plastic containers (20) and the like.

12. Apparatus (1) according to at least one of the preceding claims,
**characterised in that**
the apparatus has a buffering device (35) which is preferably arranged upstream of the blow moulding machine (25).

13. Apparatus (1) according to at least one of the preceding claims,
**characterised in that**
the apparatus (1) has a storage device (100) in which the process parameters determined between the key formulas and respective process speeds can be stored in a further formula.

## Revendications

1. Procédé de traitement de préformes en matière plastique (10) et/ou de récipients en matière plastique (20) avec au moins un premier système de traitement (2), lequel traite les récipients en matière plastique (10, 20) selon une première manière spécifiée, et avec au moins un deuxième système de traitement (4), lequel traite les récipients en matière plastique (10, 20) selon une deuxième manière spécifiée et lequel est monté en amont ou en aval du premier système de traitement (2), dans lequel les récipients en matière plastique (10, 20) sont transportés au moyen d'un système de transport (5) depuis un système de traitement (2, 4) vers l'autre système de traitement (2, 4) et l'au moins un premier système de traitement (2) et l'au moins un deuxième système de traitement (4) sont couplés l'un à l'autre, dans lequel le premier système de traitement (2) est une machine de soufflage (25) pour façonner des préformes en matière plastique (10) en des récipients en matière plastique (20) et la vitesse de processus de la machine de soufflage (25) est fixée par une prescription qui contient plusieurs paramètres de processus qui sont caractéristiques de l'opération de façonnage,
**caractérisé en ce que**
les paramètres de processus associés pour au moins une autre vitesse de processus sont définies au moins en partie à l'aide d'au moins deux prescriptions de référence de manière à permettre une adaptation de la vitesse de processus de la machine de soufflage (25) à une vitesse d'au moins un autre système de traitement (2, 4) et/ou de manière à rendre possible un réglage de la vitesse.

2. Procédé selon la revendication 1,
**caractérisé en ce que**
les paramètres de processus entre une première prescription de référence, laquelle contient une première vitesse, et une deuxième prescription de référence, laquelle contient une deuxième vitesse, sont interpolés selon une règle mathématique et sont interpolés de préférence linéairement.

3. Procédé selon la revendication 1,
**caractérisé en ce que**
le paramètre de processus caractéristique de l'opération de façonnage est de préférence une température de la préforme en matière plastique de sorte qu'une adaptation de la prescription est effectuée à l'aide de la température de la préforme en matière plastique.

4. Procédé selon la revendication 2,
**caractérisé en ce que**
la première vitesse est une vitesse minimale de la machine de soufflage (25) et la deuxième vitesse est une vitesse maximale de la machine de soufflage (25).

5. Procédé selon au moins l'une quelconque des revendications précédentes,
**caractérisé en ce que**
les paramètres de processus déterminés entre les prescriptions de référence et les vitesses de processus associées sont sauvegardés dans une autre prescription.

6. Procédé selon au moins l'une quelconque des revendications précédentes,
**caractérisé en ce que**
la modification de vitesse de la machine de soufflage (25) est effectuée avec fluidité.

7. Procédé selon au moins l'une quelconque des revendications précédentes,
**caractérisé en ce que**
les paramètres de processus caractéristiques de l'opération de façonnage sont choisis parmi un groupe de paramètres de processus, lequel contient une température des préformes en matière plastique, une pression de soufflage, un délai de façonnage, des délais de commutation des soupapes, une température du moule de soufflage, une vitesse d'étirage et similaires.

8. Procédé selon au moins l'une quelconque des revendications précédentes,
**caractérisé en ce que**
lors de la modification de la vitesse de processus de la machine de soufflage (25), des paramètres de chauffage d'un système de chauffage (30) sont également modifiés.

9. Procédé selon la revendication 8,
**caractérisé en ce que**
dans un premier temps une modification des paramètres de chauffage du système de chauffage (30) est effectuée puis la vitesse de la machine de soufflage (25) est modifiée.

10. Dispositif (1) de traitement de préformes en matière plastique (10) et/ou de récipients en matière plastique (20) avec au moins un premier système de traitement (2), lequel traite les récipients en matière plastique (10, 20) selon une première manière spécifiée, et avec au moins un deuxième système de traitement (4), lequel traite les récipients en matière plastique (10, 20) selon une deuxième manière spécifiée et lequel est monté en amont ou en aval du premier système de traitement, dans lequel les récipients en matière plastique (10, 20) peuvent être transportés au moyen d'un système de transport (5) depuis un système de traitement (2, 4) vers l'autre système de traitement (2, 4) et l'au moins un premier système de traitement (2) et l'au moins un deuxième système de traitement (4) peuvent être couplés l'un à l'autre, dans lequel le premier système de traitement (2) est une machine de soufflage (25) pour façonner des préformes en matière plastique (10) en des récipients en matière plastique (20) et la vitesse de processus de la machine de soufflage (25) peut être fixée par une prescription, laquelle contient plusieurs paramètres de processus qui sont caractéristiques de l'opération de façonnage,
**caractérisé en ce que**
les paramètres de processus associés pour au moins une autre vitesse de processus peuvent être définis au moins en partie à l'aide d'au moins deux prescriptions de référence de manière à permettre une adaptation de la vitesse de processus de la machine de soufflage (25) à une vitesse d'au moins un autre système de traitement (2, 4) et/ou de manière à rendre possible un réglage de la vitesse.

11. Dispositif (1) selon la revendication 10,
**caractérisé en ce que**
le deuxième système de traitement (4) est choisi parmi un groupe de systèmes de traitement, lequel contient une machine de moulage par injection (40) pour fabriquer des préformes en matière plastique (10), un système de chauffage (30) pour réchauffer les préformes en matière plastique (10), un système de remplissage (50) pour remplir les récipients en matière plastique (20), un système de fermeture pour fermer les récipients (20) remplis, un système de stérilisation pour stériliser les préformes en matière plastique (10) et/ou les récipients en matière plastique (20) et similaires.

12. Dispositif (1) selon au moins l'une quelconque des revendications précédentes,
**caractérisé en ce que**
le dispositif présente un système de mise en tampon (35), lequel est disposé de préférence en amont de la machine de soufflage (25).

13. Dispositif (1) selon au moins l'une quelconque des revendications précédentes,
**caractérisé en ce que**
le dispositif (1) présente un système de stockage (100), dans lequel les paramètres de processus déterminés entre les prescriptions de référence et les vitesses de processus associées peuvent être sauvegardés dans une autre prescription.
